# EUROPÄISCHE PATENTSCHRIFT

(11) **EP 2 155 381 B1**
(45) Veröffentlichungstag und Bekanntmachung des Hinweises auf die Patenterteilung: **13.07.2011**
(21) Anmeldenummer: 08758410.8
(22) Anmeldetag: 08.05.2008
(51) Int. Cl.: B01J 23/22, B01J 23/30, C10J 3/84, C01B 3/58, C10K 1/34

(54) **VERWENDUNG EINES ÜBERGANGSMETALLOXIDS ALS KATALYSATOR FÜR DIE ENTFERNUNG VON TEERSUBSTANZEN AUS SYNTHESEGAS**
USE OF A TRANSITION METAL OXIDE AS A CATALYST FOR THE ELIMINATION OF TAR SUBSTANCES FROM SYNGAS
UTILISATION D'UN OXYDE DE MÉTAL DE TRANSITION COMME CATALYSEUR POUR SUPPRIMER DES SUBSTANCES DE TYPE GOUDRONS D'UN GAZ DE SYNTHÈSE

(30) Priorität: 31.05.2007 DE 102007025420
(43) Veröffentlichungstag der Anmeldung: 24.02.2010
(73) Patentinhaber: Karlsruher Institut für Technologie, 76131 Karlsruhe (DE)
(72) Erfinder: HORNUNG, Andreas, 76185 Karlsruhe (DE); HERRMANN, Sonja, Verena, 64285 Darmstadt (DE); VOGEL, Herbert, 64569 Nauheim (DE); DROCHNER, Alfons, 65239 Hochheim (DE); SEIFERT, Helmut, 67069 Ludwigshafen (DE)
(74) Vertreter: Weddigen, Andreas
(86) Internationale Anmeldenummer: PCT/EP2008/003683
(87) Internationale Veröffentlichungsnummer: WO 2008/145248

(56) Entgegenhaltungen:
- JUUTILAINEN ET AL: "Zirconia: Selective oxidation catalyst for removal of tar and ammonia from biomass gasification gas" APPLIED CATALYSIS B: ENVIRONMENTAL, ELSEVIER, Bd. 62, Nr. 1-2, 10. Januar 2006 (2006-01-10), Seiten 86-92, XP005215022 ISSN: 0926-3373 in der Anmeldung erwähnt
- ABU EL-RUB Z ET AL: "Review of catalysts for tar elimination in biomass gasification processes" INDUSTRIAL AND ENGINEERING CHEMISTRY RESEARCH 20041027 AMERICAN CHEMICAL SOCIETY US, Bd. 43, Nr. 22, 27. Oktober 2004 (2004-10-27), Seiten 6911-6919, XP002497044

## Beschreibung

Die Erfindung betrifft eine Verwendung eines Übergangsmetallmischoxids als Oxidkatalysator zur selektiven Oxidation von Teersubstanzen in Synthesegasen mit molekularem Sauerstoff sowie ein Verfahren zur selektiven Entfernung von Teersubstanzen aus Synthesegasen gemäß des ersten bzw. fünften Patentanspruchs.

Synthesegase im vorgenannten Sinne sind Gase, wie sie beispielsweise in der Vergasung (Partikeloxidation unter Zugabe von Sauerstoff oder Wasserdampf) von organischen kohlenstoffhaltigen Einsatzstoffen zunächst als Rohsynthesegase anfallen. Sie enthalten anorganische Reduktionsmittel wie CO und H₂ und dienen als Synthesebausteine z.B. für die Herstellung von Methanol oder Kohlenwasserstoffen.

Teersubstanzen im vorgenannten Sinne umfassen gemäß [1] die Gesamtheit aller organischen Verbindungen mit Ausnahme der gasförmigen Kohlenwasserstoffe (C1 bis C6) in einem Synthesegas, das bei einer Vergasung von kohlenstoffhaltigen Materialien anfällt.

Bei der Herstellung von Synthesegas aus kohlenstoffhaltigen, d.h. organischen Einsatzstoffen wie Erdöl- oder Kohleprodukte oder Biomasse mittels Vergasung entstehen neben dem gewünschten Synthesegas je nach Prozessbedingungen unterschiedliche Mengen an Teersubstanzen der vorgenannten Art in unterschiedlicher Zusammensetzungen. Diese Teersubstanzen stören sowohl bei einer weiterführenden Verarbeitung oder Nutzung des Synthesegases beispielsweise in Methanol- oder Fischer-Tropsch-Anlagen oder auch bei der direkten Befeuerung von Wärmekraftmaschinen wie z.B. in Blockheizkraftwerken (BHKW) und müssen daher entfernt werden.

Teersubstanzen im Synthesegas neigen zudem zu einer unerwünschten Kondensation in Leitungen oder sonstigen Anlageteilen wie Förderpumpen oder Ventilen. Dies führt zu allmählicher Verstopfung und damit zu kostenintensiven Nutzungseinschränkungen und -unterbrechungen. Sie deaktivieren die Katalysatoren durch Fouling (Belegen der katalytisch aktiven Oberflächen) bei den nachfolgenden Synthesestufen.

Insbesondere heterogene kohlenstoffhaltige Einsatzstoffe wie Biomasse führen bei einer Vergasung zu einer vergleichsweise hohen Teerbeladung im Synthesegas. Deshalb strebt man bereits bei der Entstehung des Synthesegases, d.h. bei der Vergasung eine Reduzierung der Teerbildungsrate an. Adäquate Maßnahmen umfassen dabei eine Beeinflussung der Reaktionskinetik bei der Vergasung durch Katalysatoreinsatz im Vergaser, konstruktive Maßnahmen an den Vergasungsvorrichtungen sowie auch eine Prozessoptimierung durch eine entsprechende Parameterwahl.

Eine Homogenisierung des Zustroms der Einsatzstoffstrom, die zu einer Reduzierung der Teerbildung führen könnte, erfordert zusätzliche Verfahrensschritte und ist damit unwirtschaftlich. Auch eine Anhebung der Vergasungstemperatur führt zwar zu einer geringeren Teerbildungsrate, aber auch zu einem erhöhten Energiebedarf bei der Vergasung.

Oftmals sind die vorgenannten Maßnahmen zur Vermeidung der Teerbildung während der Vergasung für einen gewünschten Maximalanteil an Teer im Synthesegas allein nicht ausreichend. Je nach Nutzung des Synthesegases sind die Anforderungen an die Reinheit sehr unterschiedlich. Während bei der direkten Nutzung des Synthesegases als Brennstoff z.B. in einer Gasturbine Teergehalte von bis zu 5 mg/Nm³ und mehr tolerierbar sind, liegt die maximal zulässige Obergrenze des Teergehalts bei der einer Zuführung des Synthesegases zu einer veredelnden Methanolsynthese charakteristischerweise typischerweise bei 1 mg/Nm³_{.}

Folglich ist man bestrebt, die Teersubstanzen in Synthesegasen nach einer Vergasung zu entfernen oder unschädlich zu machen.

Häufig kommen hierbei aufwendige und teure physikalische Methoden wie Wäscher oder Elektrofilter zum Einsatz. Dabei sind verschiedene Bauarten bekannt, wie z.B. Wäschertürme, Rotationswäscher, Prallwäscher oder Venturiwäscher. Das am häufigsten eingesetzte Lösungsmittel ist Wasser, wobei sich jedoch nur Restteergehalte von minimal 20-40 mg/Nm³ erzielen lassen [17].

In [17] wird z.B. ein Wäschersystem für Rohsynthesegas beschrieben, bei dem durch den Einsatz von Ölen als Lösungsmittel ein minimaler Restteergehalt auf 10 mg/Nm3 verringert werden.

Ferner ist aus [3] ein Verfahren bekannt, bei dem ein organisches Lösungsmittel bei Temperaturen oberhalb des Siedepunktes von Wasser (100°C) eingesetzt wird.

Die genannten physikalischen Methoden sind jedoch für einen großtechnischen Einsatz wegen der anfallenden teerhaltigen Abflussmengen umweltbelastend und oftmals nicht wirtschaftlich. Nachteilig ist außerdem ein Energieverlust aufgrund einer erforderlichen Abkühlung und Entspannung des Rohsynthesegases für die Abreinigung.

Dies gilt grundsätzlich auch für eine Teerabscheidung mittels Elektrofilter. Sie bieten zwar den Vorteil einer Kombination von Teer- und Partikelabscheidung, lassen sich jedoch (wie die Gaswäsche) nur für kalte entspannte Synthesegase einsetzten [2].

Eine weitere Möglichkeit der Teerentfernung aus dem abgekühlten Rohsynthesegas bietet eine Abscheidung mit Filterelementen [5], wobei sich die Abreinigung des Filtermediums jedoch häufig als problematisch erweist.

Ferner zeigt [4] einen zusammenfassenden Überblick über gängige Verfahren zur Teerentfernung.

Bei einer in [4] erwähnten thermischen Entfernung des Teers im heißen Rohsynthesegas sind jedoch Temperaturen von über 1000°C erforderlich [6], was die Wirtschaftlichkeit des Vergasungsprozesses beeinträchtigen könnte.

Die katalytische Teerentfernung erfolgt ebenfalls im heißen Rohsynthesegas, zumeist durch Reformierungsreaktionen an verschiedenen Katalysatormaterialien. Sie ist sowohl an aus Biomasse erzeugten Rohgasen als auch an Modellgasen mit verschiedenen Katalysatorsystemen untersucht worden. Zum Einsatz kommen nichtmetallische teilweise dabei auch vorbehandelte Katalysatoren wie Dolomit [7, 8, 13, 14], Olivin [9] und Kalkspat oder Metallkatalysatoren wie Platin und Ruthenium sowie Katalysatoren auf Nickelbasis [10, 11] unter Zugabe von Promotoren (Molybdän und Kobalt), wie sie auch in der Petrochemie als Reformierkatalysatoren Verwendung finden. Es befinden sich außerdem katalytisch wirkende Filter auf Basis von Nickel in der Entwicklung [12].

Nichtmetallischen Katalysatoren [13, 14] sind zwar kostengünstig, jedoch sehr empfindlich gegenüber Verunreinigungen und stellen aufgrund ihrer geringen Standzeit ein Entsorgungsproblem dar. Bei Verwendung von den vorgenannten Gesteinsmaterialien [7-9] haben bereits geringe Abweichungen in der Mineralzusammensetzung eine deutliche Veränderung der katalytischen Aktivität zur Folge. Metallkatalysatoren sind dagegen aktiver und mechanisch stabiler aber vergleichsweise teuer. Beide genannten Katalysatortypen sind jedoch erst oberhalb Temperaturen von 800-900 °C effizient wirksam, d.h. erst dann sind mit ihnen die erforderlichen Reaktionsumsätze von über 99% erzielbar.

Weiterhin ist eine Teerentfernung mittels katalytischer Teeroxidation bekannt (vgl. [15-16]). Hierfür gibt es erste erfolgreich getestete Materialien. In [15] wird Zirkon als aktives Katalysatormaterial für die oxidative Teerentfernung im Temperaturbereich von 550-800°C beschrieben. Die Erprobung fand bisher jedoch nur mit der Modellsubstanz Toluol statt [15]. Bei der Verwendung von Palladium als aktivem Katalysatormaterial wurden bei 700 °c und unter Luftzugabe von 0,07 mg/Nm³ Rohgas Abbauraten von 98 % erreicht [16], diese Temperatur ist allerdings immer noch von der gewünschten entfernt, zudem ist Palladium ein sehr teures Material.

Davon ausgehend liegt die Aufgabe der Erfindung darin, ein Verfahren zur Entfernung von Teersubstanzen aus Rohsynthesegasen mittels Katalysator sowie die Verwendung eines Katalysators für diesen Zweck vorzuschlagen, welche die aus dem genannten Stand der Technik bekannten Einschränkungen nicht aufweisen und sich durch eine verbesserte Wirtschaftlichkeit auszeichnen. Die Aufgabe wird durch eine Verwendung und ein Verfahren mit den Merkmalen aus Anspruch 1 und 6 gelöst. Unteransprüche geben vorteilhafte Ausgestaltungen dieser Verwendung und des Verfahrens wieder. Wesentliches Merkmal der Erfindung umfasst eine Verwendung von Oxiden von einem oder mehreren Übergangsmetallen als Katalysator, mit dem vorhandene Teersubstanzen im Synthesegas selektiv mit molekularem Sauerstoff z.B. zu CO und/oder CO₂ oxidiert werden, ohne dabei gleichzeitig mit Hauptkomponenten des Synthesegas CO und H₂ zu reagieren. Ebenso besteht ein wesentliches Merkmal des Verfahrens zur selektiven Entfernung von Teersubstanzen aus Synthesegasen, umfassend eine selektive Oxidation der Teersubstanzen mit molekularem Sauerstoff, in der Verwendung eines Übergangsmetalloxids als Katalysator. Der Übergangsmetalloxidkatalysator enthält Vanadiumoxid, in einer weiteren bevorzugten Ausführung zusätzlich Molybdänoxid. Vanadiumoxid bewirkt in vorteilhafter Weise eine Oxidation der Teermodellkomponente Naphthalin, während Molybdänoxid die Selektivität bezüglich der Teermodellkomponente erhöht, so dass eine Oxidation von Wasserstoff und Kohlenmonoxid vollständig oder nahezu vermieden wird. In einer weiter bevorzugten Ausführungsform besteht der Übergangsoxidkatalysator aus Oxiden aus dem System Molybdän/Vanadium/Wolfram. Wolframoxide bewirken in vorteilhafter Weise eine Stabilisierung der Struktur und ermöglichen damit den Einsatz im gewünschten Temperaturfenster. In einer besonders bevorzugten Ausführung weist Mo/V/W-Oxidkatalysator ein molares Verhältnis der Elemente Molybdän, Vanadium und Wolfram von 7,5 bis 8,5 zu 1 bis 3 zu 0,1 bis 2, weiter bevorzugt von 8 zu 2 zu 1 auf. Mischoxide vom Typ Mo/V/W-Oxid sind zwar als Katalysator für die partielle Oxidation von Acrolein C₂H₃CHO zu Acrylsäure C₃H₄O₂ bereits bekannt. Bei Versuchen stellte sich aber überraschenderweise heraus, dass diese Katalysatoren sich nicht nur für die Oxidation von Acrolein eignen, sondern auch für die gewünschte selektive Oxidation der vorgenannten Teersubstanzen im Synthesegas. Besonders vorteilhaft dabei ist, dass das Synthesegas, insbesondere die darin enthaltenen starken aber anorganischen Reduktionsmittel CO und H₂ chemisch nicht verändert werden.

Die vorteilhafte Wirkung der Übergangsmetalloxidkatalysator wie die genannten Mo/V/W-Mischoxide beruht auf deren Vermögen, molekularen Sauerstoff in Form von Sauerstoffionen wie O²⁻ aus einer Gasphase zu binden. Die Sauerstoffionen und selektiv an organische Moleküle wie Acrolein und Teersubstanzen abgegeben, um diese katalytisch zu oxidieren. Die vorgenannte Sauerstoffspezies kann somit nicht von dem Synthesegas, insbesondere den darin enthaltenen CO- und H₂-Bestandteilen aufgenommen werden. Folglich findet im Synthesegas auch keine Oxidation mit Synthesegasbestandteilen statt.

Die Erfindung wird im Folgenden anhand von Versuchsbeispielen mit den folgenden Figuren näher erläutert. Es zeigen
**Fig.1** die zeitlichen Verläufe von Temperatur T, Konzentrationen ϕ verschiedener Substanzen, der Differentialthermoanalyse (DTA) sowie der Thermogravimetrie (TG) während der Oxidation von Naphthalin in Anwesenheit von CO und H₂ sowie
**Fig.2** die zeitlichen Verläufe von Temperatur T, Konzentrationen ϕ verschiedener Substanzen, der DTA sowie der TG während einer zu **Fig.1** vergleichenden Oxidation von Wasserstoff und Kohlenmonoxid.

### 1. Katalysatorherstellung

Für die Herstellung des Mo/V/W-Mischoxid-Katalysatormaterials werden Ammoniumheptamolybdat (NH₄)₆MO₇O₂₄, Ammoniummetavanadat NH₄VO₃ und Ammoniummetawolframat (NH₄)₆H₂W₁₂O₄₁ als Ausgangsstoffe eingesetzt. Nach Einstellung eines gewünschten molaren Verhältnisses der Elemente Molybdän, Vanadium und Wolfram, vorzugsweise von 8 zu 2 zu 1, über eine Wahl der entsprechenden Mengenverhältnisse der vorgenannten Ausgangsmaterialien wird die Mischung in eine wässrige Lösung eingebracht(1,5 l Wasser pro 45 g Feststoff), 90 min erwärmt (80 bis 90°C) und sprühgetrocknet (6 bar, Druckluft 12 ml/min Flüssigkeit, 275°C Heißluft), wobei sich eine pulverförmige Katalysatorvorstufe einstellt (Partikel mit Partikelgrößen zwischen 0,01 und 5 µm und mit vollständig oder nahezu röntgenamorpher Oberfläche bevorzugt ohne kristallinen Anteile). In einem anschließenden Kalzinierungsschritt unter Stickstoffatmosphäre wird der partikelförmige Katalysator in einem mehrstündigen Temperaturprogramm (Aufheizung mit einer Aufheizrate 2 K/min auf 325°C, danach Haltezeit 240 min bei 325°C, danach weiteres Aufheizen mit 2 K/min auf 400°C, danach Haltezeit 10 min bei 400°C, danach Abkühlung) in eine bevorzugte aktive Form überführt.

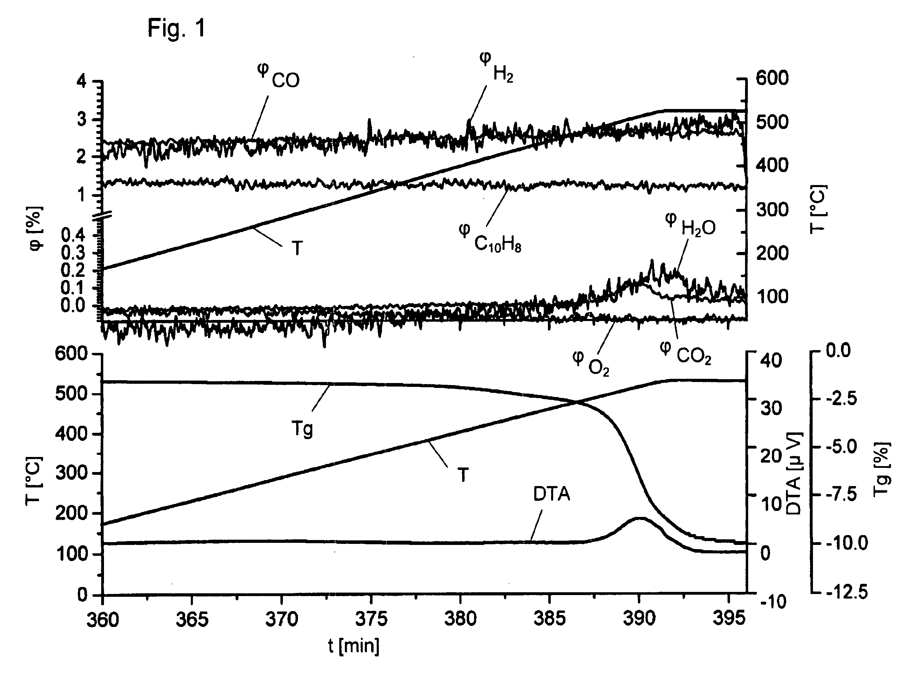

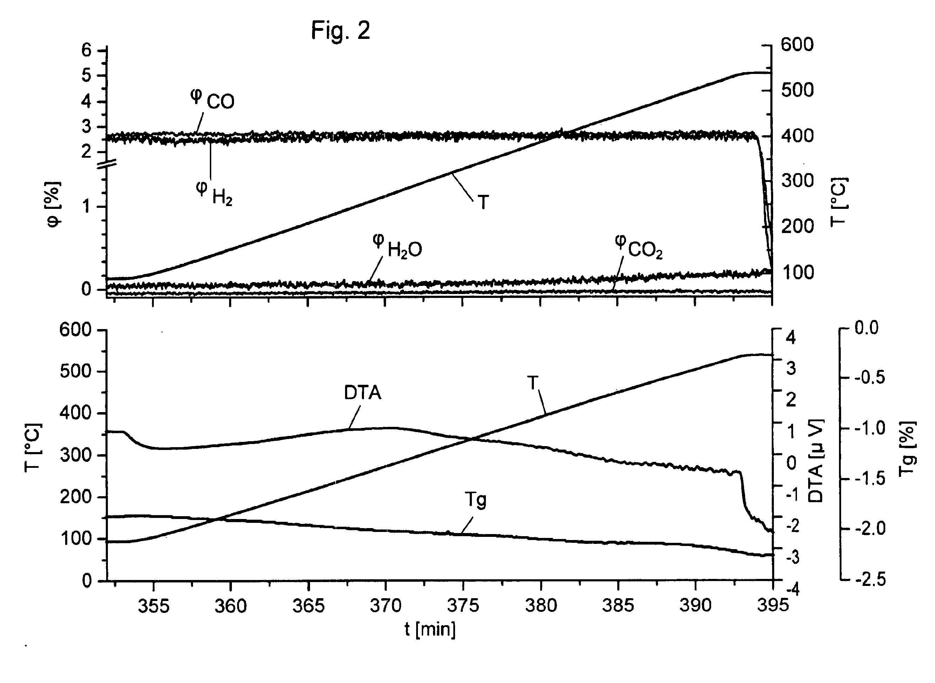

### 2. Untersuchung der Katalysatoraktivität (vgl. Fig.1 und 2)

Die chemische Aktivität des Mo/V/W-Oxid-Katalysators wurde anhand von Experimenten in einer Thermowaage mit angekoppeltem Massenspektrometer untersucht. Vor Beginn des Versuches wurde der Katalysator mit Sauerstoff vorbehandelt (1h bei 400°C in der Thermowaage, Atmosphäre 5% Sauerstoff, 95% Inertgas bestehend aus 95% Argon und 5% Helium). Er hat dadurch die maximal mögliche Menge an Sauerstoff aufgenommen. Die während der folgenden temperaturprogrammierten Reduktion (Temperaturverlauf wird vorgegeben, konstante Aufheizrate 10 K/min bis 540°C) auftretende Massenabnahmen des Katalysatormaterials können nur durch eine Abnahme des besonderen gebundenen Sauerstoffs hervorgerufen werden, die durch das darüber geleitete Reduktionsmittel ausgelöst wird. Dieser Vorgang ist reversibel, d.h. der Zyklus aus Vorbehandlung mit Sauerstoff und Reaktion mit einem Reduktionsmittel lässt sich beliebig häufig wiederholen. Spätestens ab dem zweiten Zyklus ergeben sich keine Änderungen mehr im Verhalten des Katalysators. Aus diesem Grunde werden in **Fig.1** sowie in der folgenden Beschreibung dieses Versuchsbeispiels die Ergebnisse des jeweiligen zweiten Reduktionszykluses zugrunde gelegt.

**Fig.1** zeigt in zwei übereinander angeordneten Diagrammen die zeitlichen Entwicklungen von Temperatur T (in beiden Diagrammen als ansteigende Rampe), Konzentrationen ϕ verschiedener Substanzen (oberes Diagramm), der DTA (Differential-Thermoanalyse) sowie der TG während der von der Temperatur abhängigen Reduktion der Teersubstanzen in Diagrammen.

Die Ermittlung der DTA-Werte erfolgt über eine vergleichende Messung des bei der Oxidation der Teersubstanzen entstehenden Energieumsatzes mit einer Referenzsubstanz, hier α-Al₂O₃.

Die Versuchsergebnisse anhand eines Modellgases mit 1% Naphthalin als Reduktionsmittel, 2,5% Wasserstoff und 2,5% Kohlenmonoxid mit einer Einwaage an Katalysatorsubstanz von 10 mg und einem Gasvolumenstrom von 100 mlN/min sowie bei 10 K/min Heizrate ermittelt. Das Naphthalin diente anstelle eines Teeres als definiertes und in seiner Wirkung bekanntes Modell-Reduktionsmittel zur Ermittlung der vorgenannten Versuchsergebnisses. Bei der Reduktion des Naphthalin wurde eine deutliche Reduktion des Katalysators festgestellt (**Fig.1** **unten**, DTA-Werte, Stufe bei ca. 390 min). Beim alleinigen Einsatz von Wasserstoff und Kohlenmonoxid als Reduktionsmittel blieb bei ansonsten gleichen Versuchsparametern diese Reduktion aus **(****Fig.2****)**. Daraus folgt, dass der untersuchte Katalysator für die Oxidation von Naphthalin aktiv ist, die Synthesegasbestandteile Wasserstoff und Kohlenmonoxid jedoch nicht angreift.

### Literatur:

[1] DIN CEN15439 Biomassevergasung - Teer und Staub in Produktgasen - Probenahme und analytische Bestimmung; Deutsche Fassung CEN/TS 15439:2006
[2] Ullmann's Encyclopedia of industrial chemistry, Kapitel: Gas Production, Abschnitt 5.4.4: Removal of Gas Impurities of low concentration, 7. Auflage, online release, 2005
[3] Bandi A.: Gasreinigungsverfahren, Tagungsband Fachtagung "Regenerative Kraftstoffe" 124-129, Stuttgart, 2003
[4] Bolhar-Nordenkampf M.: Arbeitsbericht der Projektgemeinschaft Biomassevergasung - Hersteller und Marktbetrachtung der thermo-chemischen Umwandlung von Biomasse, www.hessenenergie.net, 2002
[5] Hasler P., Nussbaumer T.: Gas Cleaning for IC Engine Applications from fixed Bed Biomass Gasification, Biomass and Bioenergy 16 (1999) 385-395
[6] Jess A.: Reaktionskinetische Untersuchungen zur thermischen Zersetzung von Modellkohlenwasserstoffen, Erdöl Erdgas Kohle 111 (1995) 479-484
[7] Perez P., Aznar P.M., Caballero M.A., Gil J., Martin J.A., Corella, J.: Hot Gas Cleaning and Upgrading with Calcined Dolomite Located Downstream a Biomass Fluidized Bed Gasifier Operating with Steam -Oxygen Mixtures, Energy & Fuels 11 (1997) 1194-1203
[8] Simell P.A., Halala N.A.K., Haario H.E.: Catalytic Decomposition of Gasification Gas Tar with Benzene as Model Compound, Ind. Eng. Chem. Res. 36 (1997) 42-51
[9] Devi L., Ptasinski K.J., Janssen F.J.J.G.: Decomposition of naphthalene as a biomass Tar over Pretreated Olivine: Effect of Gas Composition, Kinetic Approach, and Reaction Scheme, Ind. Eng. Chem. Res. 44 (2005) 9096-9104
[10] Jess, A.: Catalytic upgrading of tarry fuel gases: A kinetic study with model components, Chem. Eng. Proc. 35 (1996) 487- - 494
[11] Dou B., Zhang M., Gao J., Shen W., Sha X.: High-Temperature Removal of NH3, Organic Sulphur, HCI, and tar Component from Coal-Derived Gas, Ind. Eng. Chem. Res. 41 (2002) 4195-4200
[12] Ma L., Verelst H., Baron G.V.: Integrated high Temperature Gas Cleaning: Tar Removal in biomass gasification with a catalytic filter, Catalysis Today 105 (2005) 729-734
[13] Myren C., Hörnell C., Bjömbom E., Sjöström K.: Catalytic Decomposition of Biomass Pyrolysis Gas with a Combination of Dolomite and Silica, Biomass and Bioenergy 23 (2002) 217-227
[14] Orio A., Corella J., Narvaez I.: Performance of Different dolomites on Hot Raw Gas Cleaning from Biomass Gasification with Air, Ind. Eng. Chem. Res. 36 (1997) 3800-3808
[15] Juutilainen S.J., Simell P.A., Krause A.O.I.: Zirconia: Selective oxidation catalyst for removal of for and ammonia from biomass gasification gas, Appl. Catalysis B: Environmental 62 (2006) 86-92
[16] Klemm M., Hiller A., Wilhelm R.: Gasmotorentaugliches Brenngas aus der Holzvergasung durch die Entteerung mittels partieller katalytischer Oxidation und Prozessoptimierung, Tagungsband DGMK-Fachbereichstagung "Energetische Nutzung von Biomassen" 195 - 202, Velen, 2004
[17] Analyse und Evaluierung der thermo-chemischen Vergasung von Biomasse; Schriftenreihe "Nachwachsende Rohstoffe" Band 29, Landwirtschaftsverlag GmbH (2006) insbes. S.81-88

## Patentansprüche

1. Verwendung von Übergangsmetalloxiden als Übergangsmetalloxidkatalysatoren zur selektiven Oxidation von Teersubstanzen in Synthesegasen mit molekularem Sauerstoff, **dadurch gekennzeichnet, dass** der Übergangsmetalloxidkatalysator Vanadiumoxid enthält.

2. Verwendung nach Anspruch 1, **dadurch gekennzeichnet, dass** der Übergangsmetalloxidkatalysator Molybdänoxid enthält.

3. Verwendung nach einem der vorgenannten Ansprüche, **dadurch gekennzeichnet, dass** der Übergangsmetalloxidkatalysator ein Molybdän/Vanadium/Wolfram-Oxidkatalysator (Mo/V/W-Mischoxidkatalysator) ist.

4. Verwendung nach Anspruch 3, **dadurch gekennzeichnet, dass** der Mo/V/W-Mischoxidkatalysator ein molares Verhältnis der Elemente Molybdän, Vanadium und Wolfram von 7,5 bis 8,5 zu 1 bis 3 zu 0,1 bis 2 aufweist.

5. Verfahren zur selektiven Entfernung von Teersubstanzen in Synthesegasen, umfassend eine selektive Oxidation der Teersubstanzen mit molekularem Sauerstoff bei Verwendung eines Übergangsmetalloxids als Übergangsmetalloxidkatalysator nach einem der vorgenannten Ansprüche.

6. Verfahren nach Anspruch 5, **dadurch gekennzeichnet, dass** die selektive Oxidation bei einer Temperatur zwischen 200 und 650°C erfolgt.

7. Verfahren nach Anspruch 6, **dadurch gekennzeichnet, dass** die selektive Oxidation bei einer Temperatur zwischen 400 und 550°C erfolgt.

## Claims

1. Use of transition metal oxides as transition metal oxide catalysts for selective oxidation of tar substances in synthetic gasses with molecular oxygen, **characterised in that** the transition metal oxide catalyst contains vanadium oxide.

2. Use according to claim 1, **characterised in that** the transition metal oxide catalyst contains molybdenum oxide.

3. Use according to any of the preceding claims, **characterised in that** the transition metal oxide catalyst is a molybdenum / vanadium / tungsten oxide catalyst (Mo/V/W mixed oxide catalyst).

4. Use according to claim 3, **characterised in that** the Mo/V/W mixed oxide catalyst has a molar ratio of elements molybdenum, vanadium and tungsten of 7.5-8.5: 1-3:0.1-2.

5. Method for selective removal of tar substances in synthetic gasses, comprising a selective oxidation of tar substances with molecular oxygen on use of a transition metal oxide as a transition metal oxide catalyst according to any of the preceding claims.

6. Method according to claim 5, **characterised in that** the selective oxidation takes places at a temperature between 200 and 650°C.

7. Method according to claim 6, **characterised in that** the selective oxidation takes place a temperature between 400 and 550°C.

## Revendications

1. Utilisation d'oxydes de métaux transitoires comme catalyseurs d'oxydes de métaux transitoires pour l'oxydation sélective de substances à goudron dans les gaz de synthèse avec de l'oxygène moléculaire,
utilisation **caractérisée en ce que**
le catalyseur d'oxydes de métaux de transition est de l'oxyde de vanadium.

2. Utilisation selon la revendication 1,
**caractérisée en ce que**
le catalyseur d'oxydes de métaux transitoires contient de l'oxyde de molybdène.

3. Utilisation selon l'une des revendications précédentes,
**caractérisée en ce que**
le catalyseur d'oxydes de métaux transitoires est un catalyseur d'oxydes de tungstène/vanadium/molybdène (catalyseur d'oxydes mélangés Mo/V/W).

4. Utilisation selon la revendication 3,
**caractérisée en ce que**
le catalyseur d'oxydes mélangés Mo/V/W présente un rapport molaire des éléments molybdène, vanadium et tungstène de 7,5 à 8,5 / 1 à 3 / 0,1 à 2.

5. Procédé d'élimination sélective des substances goudronneuses dans des gaz de synthèse comprenant une oxydation sélective des substances goudronneuses avec de l'oxygène moléculaire en utilisant un oxyde de métal transitoire comme catalyseur à onde de métal transitoire selon l'une des revendications précédentes.

6. Procédé selon la revendication 5,
**caractérisé en ce que**
l'oxydation sélective se fait à une température comprise entre 200 et 650°C.

7. Procédé selon la revendication 6,
**caractérisé en ce que**
l'oxydation sélective se fait à une température comprise entre 400 et 550°C.
